# EUROPEAN PATENT SPECIFICATION

(11) **EP 1 270 181 B1**
(45) Date of publication and mention of the grant of the patent: **18.08.2004**
(21) Application number: 02013851.7
(22) Date of filing: 22.06.2002
(51) Int. Cl.: B29C 65/00

(54) **Method for forming longitudinal joints in a tube arrangement**
Verfahren zur Bildung von Verbindungen in Längsrichtung einer Röhrenanordnung
Procédé pour former des joints longitudinaux dans un ensemble de tubes

(30) Priority: 27.06.2001 SE 0102271
(43) Date of publication of application: 02.01.2003
(73) Proprietor: Nordström, Lars Ingvar, S-224 60 Lund (SE)
(72) Inventor: Nordström, Lars Ingvar, S-224 60 Lund (SE)
(74) Representative: Petri, Stellan

(56) References cited:
- US-A- 4 325 653

## Description

### Technical Field

The present invention relates to a method for forming longitudinal joints in a tube arrangement, which comprises two tubes and a common separation wall between these tubes and is formed of elongated cloths of a heat-sealable material.

### Background of the Invention

A tube arrangement of this kind may for example be used for transporting air in a tunnel. In such a case the tube arrangement is suspended from the tunnel ceiling.

It is here of importance to keep the height or thickness of the tube arrangement at a minimum so as not to decrease the useful height of the tunnel more than necessary. For this reason use can be made of several parallel tubes with smaller diameters rather than one tube with a greater diameter for transporting the same air volume.

Especially, two tubes connected by a common separation wall can form a so called twin tube. Such a twin tube saves height when used for transporting air but to a greater degree when it is not used for transporting air and accordingly hangs down from the tunnel ceiling.

Another utilization for a twin tube of the kind described is for damming water. When preferably filled with water (with the possible addition of compressed air), a twin tube has a much better ability to withstand the forces from water to be dammed than a single tube, which may easily roll or move on its substrate.

A heat-sealed joint can open quite easily when subjected to tear-apart forces but is highly resistant against tensile forces.

The main object of the invention is accordingly to accomplish joints in a tube arrangement of the kind defined above which in use are exposed to tensile forces and not tear-apart forces.

### The Invention

This is according to the invention attained in that each flap provided at each longitudinal edge of the three elongated cloths - for the two tubes and the separation wall - is heat sealed to an edge portion of another cloth for forming two cloth layers in each part of the joint.

### The Drawing

The invention will be described in further detail below under reference to the accompanying drawing, in which
Fig 1 is a schematic perspective view of a twin tube arrangement to which the invention pertains,
Fig 2 is a view to a larger scale illustrating how a joint according to the invention is built up, and
Fig 3 shows the lower joint in Fig 2 completed.

### Detailed Description of a Preferred Embodiment

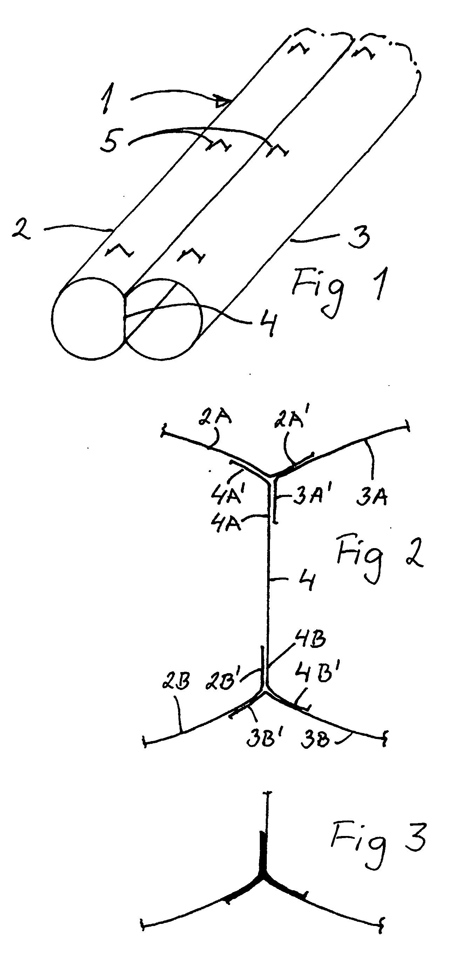

A twin tube arrangement 1 as schematically shown in Fig 1 may be used for example for transporting air in tunnels or for damming water. In the latter case the tube arrangement is filled with water and possibly pressurized air or possibly even only air.

The tube arrangement basically consists of two generally cylindrical tubes 2, 3 connected by a separation wall 4 along a common chord of the two cylinders, so that an arrangement 1 as shown in Fig 1 is formed. The diameter of each cylinder may normally be less than 1 m, but it is quite possible to have cylinder diameters of up to 3 m or more.

Each tube 2, 3 may on its upper side be provided with hook means 5 for its suspension by means of for example wires in the ceiling of a tunnel where the arrangement is mounted.

If a certain air volume is to be transported by the tube arrangement 1, it may be more advantageous to make use of two or more tubes in parallel than of one single tube with a correspondingly larger diameter, as a single tube will occupy a larger height in the upper portion of the tunnel, especially if the tube is not inflated by air and accordingly hangs down freely. This is of great importance, as the height of a tunnel has to be kept at a minimum.

If the tube arrangement is to be used for water damming, a marked improvement with regard to stability and ability to withstand forces from the dammed water is obtained by the arrangement of two or more tubes instead of just one.

The cloth material in the tube arrangement is preferably a heat-sealable plastic material, reinforced by a fabric of synthetic fibre, glass or the like. The plastic material may preferably be PVC but polyurethane is another possibility. The cloth material may alternatively be a reinforced, vulcanizable rubber material.

It is well known in the art that a heat-sealed joint between two cloths to be used for the tubes may open quite easily if exposed to tear-apart forces (generally perpendicular to the plane of a cloth), whereas it is highly resistant against tensile forces in the plane of the cloths.

It is accordingly the main object of the invention to accomplish joints in the twin tube arrangement where the material is only exposed at use to tensile forces and not tear-apart forces.

Reference is now made to Fig 2, showing the joint technique to be used for accomplishing this object. The three elongated cloths used for creating the twin tube 1 shown in Fig 1, namely the cloth for the left or first tube 2, the cloth for the right or second tube 3, and the cloth for the separation wall 4, are all at both transverse edges provided with integrated, longitudinal flaps 2A', 2B', 3A', 3B', 4A', and 4B', where the letter A indicates a position at the upper joint in Fig 2 and the letter B a position at the lower joint.

Fig 2 illustrates a situation before the joints are heat-sealed, so that it becomes clear how the joints are built up, whereas Fig 3 shows the lower joint after heat-sealing. In practice, the joints may be continually formed in a machine for heat-sealing, where the different cloths are supplied into their correct positions for sealing.

In the upper portion of Fig 2 it is illustrated that the flap 4A' of the upper part of the separation wall 4 is laid against the edge portion 2A of the cloth for the first tube 2 itself; the flap 2A' of the tube 2 is laid against the edge portion 3A of the cloth for the second tube 3 itself; and the flap 3A' of the tube 3 is laid against the edge portion 4A of the separation wall 4.

In a similar way and as shown in Fig 2, the lower overlap joint is formed by the flap 4B' on the the edge portion 3B of the second tube 3, the flap 2B' on the separation wall 4, and the flap 3B' on the edge portion 2B of the first tube 2.

Hereby the two joints can be defined as being mirror inverted in relation to each other. However, it would for example alternatively be possible to form the lower joint by the flap 3B' on the separation wall 4, the flap 2B' on the edge portion 3B of the second tube 3, and the flap 4B' on the edge portion 2B of the first tube 2.

The formed overlap joints are heat sealed to the condition shown in Fig 3. It appears that all the three legs of the joint are formed of two cloth layers and that the joints are only exposed to tensile forces, as desired.

A similar technique can be used also if more than two tubes are to be joined into a tube arrangement. It is for example possible to join several tubes, each shaped like a piece of cake, into a tube arrangement, where the principle of the invention is used at least at the hub, where the different radial cloths are heat-sealed or vulcanized to each other.

The invention is directed to the geometrical way of building up the joints for obtaining the desired exposure only to tensile forces, whereas the technology and machinery for accomplishing the joints are regarded as state of the art.

In the claims hereinafter reference is only made to heat-sealing for the sake of clarity. However, it is also within the scope of the claims to use vulcanizing or even a glueing technique for accomplishing the joints.

## Claims

1. A method for forming longitudinal joints in a tube arrangement (1), which comprises two tubes (2, 3) and a common separation wall (4) between these tubes and is formed of three elongated cloths of a heat-sealable material, wherein each flap (2A', 3A', 4A'; 2B', 3B', 4B') provided at each longitudinal edge of the three elongated cloths - for the two tubes (2, 3) and the separation wall (4) - is heat-sealed to an edge portion (2A, 3A, 4A; 2B, 3B, 4B) of another cloth for forming two cloth layers in each part of the joint.

2. A method according to claim 1, wherein the flaps (4A'; 4B') of the upper part (4A) and the lower part (4B), respectively, of the separation wall (4) are heat-sealed to the respective edge portions (2A; 3B) of the first tube (2) and the second tube (3); that the flaps (2A'; 2B') of the first tube (2) are heat-sealed to the edge portion (3A) of the second tube (3) and the edge portion (4B) of the lower part of the separation wall (4), respectively; and that the flaps (3A'; 3B') of the second tube (3) are heat-sealed to the edge portion (4A) of the upper part of the separation wall (4) and the edge portion (2B) of the first tube (2).

3. A method according to claim 1, wherein the flaps (4A'; 4B') of the separation wall (4) are heat-sealed to the edge portions (2A; 2B) of the first tube (2); that the flaps (2A'; 2B') of the first tube (2) are heat-sealed to the edge portions (3A; 3B) of the second tube (3), and that the the flaps (3A'; 3B') of the second tube (3) are heat-sealed to the edge portions (4A; 4B) of the separation wall (4).

## Patentansprüche

1. Verfahren zum Bilden von Längsverbindungen in einer Rohranordnung (1), die zwei Rohre (2, 3) und eine gemeinsame Trennwand (4) zwischen diesen Rohren aufweist und gebildet wird durch drei längliche Lappen eines heißsiegelfähigen Werkstoffs, wobei jede Lasche (2A', 3A', 4A'; 2B', 3B', 4B'), die an jedem Längsrand der drei länglichen Lappen vorgesehen ist - für die beiden Rohre (2, 3) und die Trennwand (4) -, mit einem Randbereich (2A, 3A, 4A; 2B, 3B, 4B) eines anderen Lappens heißversiegelt ist, um zwei Lappenschichten in jedem Teil der Verbindung zu bilden.

2. Verfahren nach Anspruch 1, bei dem die Laschen (4A'; 4B') des oberen Teils (4A) und des unteren Teils (4B) der Trennwand (4) mit den zugehörigen Randbereichen (2A; 3B) des ersten Rohrs (2) bzw. des zweiten Rohrs (3) heißversiegelt sind, daß die Laschen (2A'; 2B') des ersten Rohrs (2) mit dem Randbereich (3A) des zweiten Rohrs (3) und dem Randbereich (4B) des unteren Teils der Trennwand (4) heißversiegelt sind, und daß die Laschen (3A', 3B') des zweiten Rohrs (3) mit dem Randbereich (4A) des oberen Teils der Trennwand (4) und dem Randbereich (2B) des ersten Rohrs (2) heißversiegelt sind.

3. Verfahren nach Anspruch 1, bei dem die Laschen (4A'; 4B') der Trennwand (4) mit den Randbereichen (2A; 2B) des ersten Rohrs (2) heißversiegelt sind; daß die Laschen (2A'; 2B') des ersten Rohrs (2) mit den Randbereichen (3A; 3B) des zweiten Rohrs (3) heißversiegelt sind, und daß die Laschen (3A'; 3B') des zweiten Rohrs (3) mit den Randbereichen (4A; 4B) der Trennwand (4) heißversiegelt sind.

## Revendications

1. Procédé de formage de joints longitudinaux dans un agencement de tubes (1), qui comprend deux tubes (2, 3) et une cloison séparatrice (4) commune entre ces tubes et est formé de trois pièces allongées de matériau soudable à chaud, dans lequel chacune des pattes (2A', 3A', 4A' ; 2B', 3B', 4B') placées sur chacun des bords longitudinaux des trois pièces allongées - pour les deux tubes (2, 3) et pour la cloison séparatrice (4) - est soudée à chaud sur une partie marginale (2A, 3A, 4A ; 2B, 3B, 4B) d'une autre pièce afin de former des couches de deux pièces à tous les points du joint.

2. Procédé selon la revendication 1, dans lequel les pattes (4A' ; 4B') de la partie supérieure (4A) et de la partie inférieure (4B), respectivement, de la cloison séparatrice (4) sont soudées à chaud sur les parties marginales (2A ; 3B) respectives du premier tube (2) et du second tube (3) ; les pattes (2A' ; 2B') du premier tube (2) sont soudées à chaud sur la partie marginale (3A) du second tube (3) et sur la partie marginale (4B) de la partie inférieure de la cloison séparatrice (4), respectivement ; et les pattes (3A' ; 3B') du second tube (3) sont soudées à chaud sur la partie marginale (4A) de la partie supérieure de la cloison séparatrice (4) et sur la partie marginale (2B) du premier tube (2).

3. Procédé selon la revendication 1, dans lequel les pattes (4A' ; 4B') de la cloison séparatrice (4) sont soudées à chaud sur les parties marginales (2A ; 2B) du premier tube (2) ; les pattes (2A' ; 2B') du premier tube (2) sont soudées à chaud sur les parties marginales (3A ; 3B) du second tube (3) ; et les pattes (3A' ; 3B') du second tube (3) sont soudées à chaud sur les parties marginales (4A ; 4B) de la cloison séparatrice (4).
